# EUROPÄISCHE PATENTSCHRIFT

(11) **EP 3 887 257 B1**
(45) Veröffentlichungstag und Bekanntmachung des Hinweises auf die Patenterteilung: **13.09.2023**
(21) Anmeldenummer: 19821252.4
(22) Anmeldetag: 25.11.2019
(51) Int. Cl.: B29C 73/24, B64F 5/40, B29C 73/10

(54) **ANZEIGEVORRICHTUNG UND VERFAHREN ZUM ÜBERWACHEN DER STRUKTURELLEN INTEGRITÄT EINER REPARATURSTELLE**
DISPLAY DEVICE AND METHOD FOR MONITORING THE STRUCTURAL INTEGRITY OF A REPAIR BOND
DISPOSITIF D'AFFICHAGE ET MÉTHODE POUR SURVEILLER L'INTÉGRITÉ STRUCTURELLE D'UNE LIAISON DE RÉPARATION

(30) Priorität: 27.11.2018 DE 102018129872
(43) Veröffentlichungstag der Anmeldung: 06.10.2021
(73) Patentinhaber: Airbus Defence and Space GmbH, 82024 Taufkirchen (DE)
(72) Erfinder: KÖRWIEN, Thomas, 82024 Taufkirchen (DE); MAIER, Anton, 82024 Taufkirchen (DE); KRUSE, Thomas, 21129 Hamburg (DE); HOLTMANNSPÖTTER, Jens, 85435 Erding (DE)
(74) Vertreter: LKGLOBAL Lorenz & Kopf Patentanwalt Attorney at Law PartG mbB
(86) Internationale Anmeldenummer: PCT/EP2019/082450
(87) Internationale Veröffentlichungsnummer: WO 2020/109242

(56) Entgegenhaltungen:
- US-A1- 2005 006 526
- BAKER ALAN ET AL: "Advances in the proof test for certification of bonded repairs - Increasing the Technology Readiness Level", INTERNATIONAL JOURNAL OF ADHESION AND ADHESIVES, ELSEVIER, AMSTERDAM, NL, Bd. 64, 22. Oktober 2015 (2015-10-22), Seiten 128-141, XP029300262, ISSN: 0143-7496, DOI: 10.1016/J.IJADHADH.2015.10.008

## Beschreibung

Verschiedene Ausführungsformen betreffen allgemein eine Anzeigevorrichtung und ein Verfahren zum Überwachen der strukturellen Integrität einer Reparaturstelle.

Baker Alan et al: "Advances in the proof test for certification of bonded repairs - Increasing the Technology Readiness Level" gibt einen Überblick über Verfahren und Möglichkeiten zum Testen von Klebereparaturen und die Zertifizierung von solchen Reparaturen.

US 2005 / 006 526 A1 beschreibt ein Verfahren, bei dem eine beschädigte Stelle einer Struktur aus Verbundwerkstoff, z. B. einer Flügelhaut an einem Flugzeug, repariert wird. Das Verfahren umfasst die Schritte des Reparierens der beschädigten Stelle mit Reparaturmaterial, einschließlich Klebstoff, und des gleichzeitigen Verbindens einer Testvorrichtung, z. B. eines Knopfes, an einer Teststelle neben der Reparatur mit Hilfe von Material, das dasselbe ist wie das Reparaturmaterial. Die Bedingungen, denen die beschädigte Stelle und die Prüfstelle ausgesetzt sind, sind im Wesentlichen die gleichen. Nach der Reparatur kann die Festigkeit der Reparaturverbindung indirekt beurteilt werden, indem ein Drehmoment auf die Prüfvorrichtung ausgeübt wird, um die Haftfestigkeit der Prüfvorrichtung an der Struktur zu beurteilen.

Für die Zulassung von geklebten Strukturen ist eine nichtzerstörende Prüfmethode (NDT) mit Festigkeitsaussage gefordert. Dies ist technisch momentan nicht realisiert. Auch beispielsweise ein sogenannter Proofloadtest kann in vielen Umständen nicht realisiert werden. Ist beispielsweise eine Reparatur einmal geklebt, so kann die Güte bzw. die Restfestigkeit nicht bestimmt werden. Bekannt sind beispielsweise Prüfverfahren, bei denen Prüflinge durch Torsion abgeschert werden. Aus der resultierenden Festigkeit und dem Bruchbild kann beispielsweise der Zustand der Klebung ermittelt werden. Der Nachteil ist, dass bei diesen Verfahren die Proben nicht den eigentlichen Belastungszustande der Klebung repräsentieren und in der Regel sehr groß sind und bereits dadurch beispielsweise eine Befestigung an der Außenhaut eines Flugzeugs nahezu unmöglich machen.

Davon ausgehend ist es Aufgabe der Erfindung, eine Vorrichtung bereitzustellen, die die genannten Nachteile verbessert.

Diese Aufgabe wird mit einer Vorrichtung mit den Merkmalen des Anspruchs 1 sowie einem Verfahren mit den Merkmalen des Anspruchs 13 gelöst. Beispielhafte Ausführungsformen sind in den abhängigen Ansprüchen dargestellt. Es sei darauf hingewiesen, dass die Merkmale der Ausführungsbeispiele der Vorrichtungen auch für Ausführungsformen des Verfahrens gelten und umgekehrt.

Erfindungsgemäß wird eine Anzeigevorrichtung zum Überwachen der strukturellen Integrität einer Reparaturstelle an einer aus einem Verbundmaterial gefertigten Laminatstruktur eines Teils einer Luftfahrzeugaußenhaut angegeben. Die Anzeigevorrichtung weist wenigstens einen länglichen dünnen Indikatorstreifen auf. Der Indikatorsteifen ist in unmittelbarer Nachbarschaft der Reparaturstelle lösbar auf einer äußeren Schicht der Laminatstruktur aufgebracht. Der Indikatorstreifen ist ausgebildet, eine vordefinierte Restfestigkeit einer Klebung eines Reparaturpatch mit dem umgebenden Verbundmaterial anzuzeigen. Der Indikatorstreifen ist mittels eines Klebemittels auf der ausgehärteten Klebung aufgebracht. Der Indikatorstreifen weist eine vordefinierte Vorspannung auf, die auf eine zu erreichende Zielfestigkeit der Klebung des Reparaturpatch mit dem umgebenden Verbundmaterial abgestimmt ist.

Der Erfindung liegt der Gedanke zugrunde, eine einfache Anzeigevorrichtung zur Überwachung der Klebung eines Reparaturpatch in einer Reparaturstelle einer aus einem Verbundmaterial gefertigten Laminatstruktur bereitzustellen. Die Anzeigevorrichtung ist in der Lage einfach und zuverlässig eine vordefinierte Restfestigkeit der Klebung des Reparaturpatch in der Reparaturstelle anzuzeigen, in dem sich der Indikatorstreifen beispielsweise wenigstens teilweise selbst ablöst und beispielsweise von der Laminatstruktur absteht, wenn eine vordefinierte Mindestfestigkeit unterschritten wird. Dadurch ist eine einfache visuelle Sichtbarkeit bei beispielsweise einer Inspektion möglich.

Unter dem Begriff Restfestigkeit ist eine Resthaftung des Klebemittels zu verstehen, die noch ausreichend ist, den Reparaturpatch tragend in der Reparaturstelle zu halten. Bevorzugt ist die Reparaturstelle eine Vertiefung in einer Laminatstruktur, die beispielsweise durch eine bevorzugt äußere Beschädigung der Laminatstruktur entstanden ist. Um eine möglichst optimale Reparaturstelle zu erhalten, wird beispielsweise die beschädigte Stelle definiert erweitert, um beispielsweise einen vorgefertigten Reparaturpatch mit vorgegebenen Abmessungen in die Reparaturstelle einbringen zu können. Alternativ kann auch der Reparaturpatch individuell an die Reparaturstelle angepasst werden.

Gemäß einer bevorzugten Ausführungsform der Anzeigevorrichtung besteht der Indikatorstreifen aus einem Metall, einer Metalllegierung oder einem Faserverbundwerkstoff. Alternativ können auch vergleichbare Materialien verwende werden, die geeignet sind, unter einer definierten Vorspannung aufgebracht zu werden und diese Spannung über einen längeren Zeitraum zu halten.

Gemäß einer bevorzugten Ausführungsform der Anzeigevorrichtung weist das Metall insbesondere Aluminium, Titan, Stahl oder eine Legierung aus einem der vorhergenannten Metalle auf. Bevorzugt ist das Metall oder die Metalllegierung korrosionskompatibel.

Gemäß der Erfindung weist der Indikatorstreifen eine vordefinierte Vorspannung auf. Die vordefinierte Vorspannung ist auf eine zu erreichende Zielfestigkeit der Klebung des Reparaturpatch mit dem umgebenden Verbundmaterial abgestimmt. Der Indikatorstreifen weist beispielsweise vor dem Anbringen auf der Klebung eine vordefinierte Krümmung auf. Beim Anbringen wird erreicht, dass der Indikatorstreifen unter einer vordefinierten Vorspannung auf der Klebung angebracht ist und sich bei Erreichen einer Restfestigkeit der Klebung wenigstens teilweise bevorzugt selbstständig ablöst. Alternativ kann der Indikatorstreifen auch mit einer vordefinierten Zugkraft teilweise abgelöst werden.

Gemäß einer bevorzugten Ausführungsform der Anzeigevorrichtung erfolgt die Klebung mittels eines Klebefilms. Bevorzugt wird zur Herstellung des Klebefilms beispielsweise mittels eines Filmklebestoffs eine Schicht mit einer vordefinierten Stärke in die Reparaturstelle eingebracht. Bevorzugt wird der Filmklebestoff in einen über die Reparaturstelle sich hinaus erstreckenden Erstreckungsbereich aufgebracht. Bekannte Filmklebstoffe sind Beispielsweise EA9695 oder FM300.

Gemäß der Erfindung ist der Indikatorstreifen mittels eines Klebemittels auf der ausgehärteten Klebung aufgebracht. Um eine ausreichend zuverlässige Klebung des Indikatorstreifens auf dem vorzugsweise ausgehärteten Klebemittel zu gewährleisten, wird der Indikatorstreifen mit Hilfe eines Klebemittels zuerst mit einem ersten Abschnitt auf aufgeklebt. Weist die Klebung eine ausreichend starke Haftung auf, kann der unter Vorspannung stehende zweite Abschnitt des Indikatorstreifens ebenfalls mit einem Klebemittel aufgebracht werden. Bevorzugt handelt es sich bei dem Klebemittel um einen Pastenklebstoff bzw. pastösen Klebstoff. Bekannte Pastenklebstoffe sind beispielsweise EA9394 oder EA 9395.

Gemäß einer bevorzugten Ausführungsform der Anzeigevorrichtung weist das Klebemittel eine höhere Haftung als der Klebefilm der Klebung für den Reparaturpatch auf. Um eine vordefinierte Restfestigkeit der eigentlichen Klebung des Reparaturpatch in der Reparaturstelle mit Hilfe des Indikatorstreifens zu indizieren, weist das Klebemittel mit dem der Indikatorstreifen aufgebracht ist eine vorzugsweise über den gesamten Zeitraum höhere Klebekraft auf, als die Klebung des Reparaturpatch in der Reparaturstelle. Dies hat den Vorteil, dass im Falle einer Ablösung des Indikatorstreifens Rückschlüsse auf die Restfestigkeit der Klebung des Reparaturpatch gezogen werden können.

Gemäß einer bevorzugten Ausführungsform der Anzeigevorrichtung löst sich der Indikatorstreifen bei Erreichen einer vordefinierten Resthaftung der Klebung wenigstens teilweise ab oder ist ablösbar. Weist die Klebung nur noch eine vordefinierte Resthaftung auf, kann sich der unter Vorspannung stehende Indikatorstreifen bevorzugt wenigstens teilweise ablösen. Alternativ kann der Indikatorstreifen mit beispielsweise einer vordefinierten Zugkraft abgelöst werden. Der wenigstens teilweise abstehende Indikatorstreifen ist somit in der Lage anzuzeigen, dass beispielsweise eine vordefinierte Restfestigkeit einer Klebung erreicht oder alternativ auch unterschritten ist. Dies ist somit eine Indikation dahingehend, dass beispielsweise die Klebung des Reparaturpatch in der Reparaturstelle selbst auch nur noch eine vordefinierte Restfestigkeit aufweist. Beispielsweise würde dann ein Reparaturpatch mit einem wenigstens teilweise abgelösten Indikatorstreifen bei der nächsten Gelegenheit geprüft, ersetzt oder mit einer neuen Klebung versehen werden.

Gemäß einer bevorzugten Ausführungsform der Anzeigevorrichtung weist der Indikatorstreifen eine vordefinierte Bruchstelle oder Bruchlinie auf. Anhand einer vordefinierten Bruchstelle oder Bruchlinie kann beispielsweise eine gewünschte Ablösung des beispielweise vorgespannten Indikatorstreifens bei einer vordefinierten Restfestigkeit der Klebung erfolgen. Bei Erreichen einer vordefinierten Restfestigkeit der Klebung kann der Indikatorstreifen beispielsweise entlang der Bruchlinie auf Grund der Vorspannung, mit der der Indikatorstreifen auf die Klebung aufgebracht ist, brechen. Die Bruchfestigkeit des Indikatorstreifens entlang der Bruchlinie ist vorzugsweise auf die Restfestigkeit der Klebung abgestimmt, so dass sich beispielsweise der Indikatorsteifen bei Erreichen der vordefinierten Restfestigkeit der Klebung ablöst und entlang der Bruchlinie entsprechend leicht bricht. Hierdurch kann der Indikatorstreifen individuell vorkonfiguriert werden.

Gemäß einer bevorzugten Ausführungsform der Anzeigevorrichtung ist der Indikatorstreifen auf einem sich über den Umfang der Reparaturstelle hinaus erstreckenden Auftragungsbereich der Klebung aufgebracht. Um die Restfestigkeit der Klebung zu detektieren, ist der Indikatorstreifen beispielsweise auf dem identischen Klebematerial aufgebracht, mit dem die Klebung des Reparaturpatch in der Reparaturstelle erfolgt. Beispielsweise kann die Klebung wenigstens einseitig über den Klebebereich der Reparaturstelle selbst erweitert aufgetragen sein. Beispielsweise ist der erweiterte Auftragungsbereich wenigstens so groß wie der Indikatorsteifen.

Gemäß einer bevorzugten Ausführungsform der Anzeigevorrichtung weist der Indikatorstreifen eine Dicke zwischen 0,1 mm und 0,5 mm auf. Besonders bevorzugt weist der Indikatorstreifen eine Dicke zwischen 0,1 mm und 0,3 mm auf. Bevorzugt weist der Indikatorstreifen eine durchgehende Dicke auf.

Gemäß einer bevorzugten Ausführungsform der Anzeigevorrichtung weist der Indikatorstreifen ein Verhältnis von Länge zu Breite im Bereich von 1 zu 2 bis 1 zu 10 auf. Besonders bevorzugt weist der Indikatorstreifen ein Verhältnis von Länge zu Breite im Bereich von 1 zu 3 bis 1 zu 5 aufweist.

Gemäß einer bevorzugten Ausführungsform der Anzeigevorrichtung weist der Indikatorstreifen ein durchgehendes Verhältnis von Länge zu Breite auf. Gemäß einer weiteren bevorzugten Ausführungsform weist der Indikatorsteifen wenigstens einen ersten Bereich auf, der ein erstes Verhältnis von Länge zu Breite hat und wenigstens einen zweiten Bereich mit einem zweiten Verhältnis von Länge zu Breite, wobei sich das erste Verhältnis von Länge zu Breite von dem zweiten Verhältnis von Länge zu Breite unterscheidet.

Gemäß einer bevorzugten Ausführungsform der Anzeigevorrichtung ist der Indikatorstreifen in einer Vertiefung des Verbundmaterials eingebracht. Beispielsweise ist, abhängig von der Restfestigkeit bzw. Materialstärke des umgebenden Verbundmaterials an der Stelle des Indikatorstreifens wenigstens ein Teil des Verbundmaterials entfernt oder bei der Herstellung des entsprechenden Bauteils ausgelassen worden. Dies hat den Vorteil, dass der Indikatorstreifen nicht über das Verbundmaterial hinaus übersteht und eine dadurch eine homogenere Oberfläche ermöglicht.

Gemäß einer bevorzugten Ausführungsform der Anzeigevorrichtung ist die Oberfläche des Indikatorstreifens bündig mit der Oberfläche des umgebenden Verbundmaterials. Vorzugsweise ist der Indikatorstreifen wenigstens soweit in einer Vertiefung des Verbundmaterials eingelassen, dass er wenigstens nahezu bündig mit dem umgebenden Material abschließt. Dies hat den Vorteil, dass eine homogene Oberfläche im Bereich der Reparaturstelle vorliegt.

Weiter wird ein Verfahren zum Überwachen der strukturellen Integrität einer Reparaturstelle angegeben. Die Reparatur wird an einer aus einem Verbundmaterial gefertigten Laminatstruktur vorgenommen. Die Laminatstruktur ist Teil einer Luftfahrzeugaußenhaut. Die Laminatstruktur ist während eines Flugs des Luftfahrzeugs Belastungen ausgesetzt. Das Verfahren umfasst das Aufbringen eines Klebefilms auf eine Reparaturstelle der Laminatstruktur. Der Klebefilm erstreckt sich auf einer äußeren Schicht der Laminatstruktur wenigstens teilweise über die Reparaturstelle hinaus in einen Erstreckungsbereich. Es wird ein Reparaturpatch auf den Klebefilm in die Reparaturstelle eingeklebt. Die Klebung wird ausgehärtet. Eine Anzeigevorrichtung wird auf dem Erstreckungsbereich aufgebracht. Die Anzeigevorrichtung weist einen Indikatorstreifen auf. Der Indikatorstreifen ist ausgebildet, eine vordefinierte Restfestigkeit der Klebung des Reparaturpatch mit dem umgebenden Verbundmaterial anzuzeigen. Der Indikatorstreifen wird mittels eines Klebemittels auf der ausgehärteten Klebung aufgebracht. Der Indikatorstreifen weist eine vordefinierte Vorspannung auf, die auf eine zu erreichende Zielfestigkeit der Klebung des Reparaturpatch mit dem umgebenden Verbundmaterial abgestimmt ist.

In den Zeichnungen beziehen sich im Allgemeinen gleiche Bezugszeichen auf die gleichen Teile über die verschiedenen Ansichten hinweg. Die Zeichnungen sind nicht notwendigerweise maßstabsgetreu; Wert wird stattdessen im Allgemeinen auf die Veranschaulichung der Prinzipien der Erfindung gelegt. In der folgenden Beschreibung werden verschiedene Ausführungsformen der Erfindung beschrieben unter Bezugnahme auf die folgenden Zeichnungen, in denen:
- FIG. 1: eine erste Ausführungsform der Anzeigevorrichtung zeigt;
- FIG. 2: eine weitere Ansicht der in Figur 1 dargestellten Ausführungsform zeigt;
- FIG. 3: eine weitere Ausführungsform der Anzeigevorrichtung zeigt;
- FIG. 4: eine weitere Ansicht der in Figur 3 dargestellten Ausführungsform zeigt;
- FIGs.: 5a und b verschiedene Schritte des Verfahrens zum Aufbringen einer Anzeigevorrichtung zeigen;
- FIG. 6: eine erste Ausführungsform eines Indikatorstreifens zeigt; und
- FIG. 7: eine weitere Ausführungsform eines Indikatorstreifens zeigt.

Die folgende detaillierte Beschreibung nimmt Bezug auf die beigefügten Zeichnungen, welche zur Erläuterung spezifische Details und Ausführungsformen zeigen, in welchem die Erfindung praktiziert werden kann.

Das Wort "beispielhaft" wird hierin verwendet mit der Bedeutung "als ein Beispiel, Fall oder Veranschaulichung dienend". Jede Ausführungsform oder Ausgestaltung, die hierin als "beispielhaft" beschrieben ist, ist nicht notwendigerweise als bevorzugt oder vorteilhaft gegenüber anderen Ausführungsformen oder Ausgestaltungen auszulegen.

In der folgenden ausführlichen Beschreibung wird auf die beigefügten Zeichnungen Bezug genommen, die einen Teil dieser Beschreibung bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

In den Figuren werden identische oder ähnliche Elemente mit identischen Bezugszeichen versehen, soweit dies zweckmäßig ist.

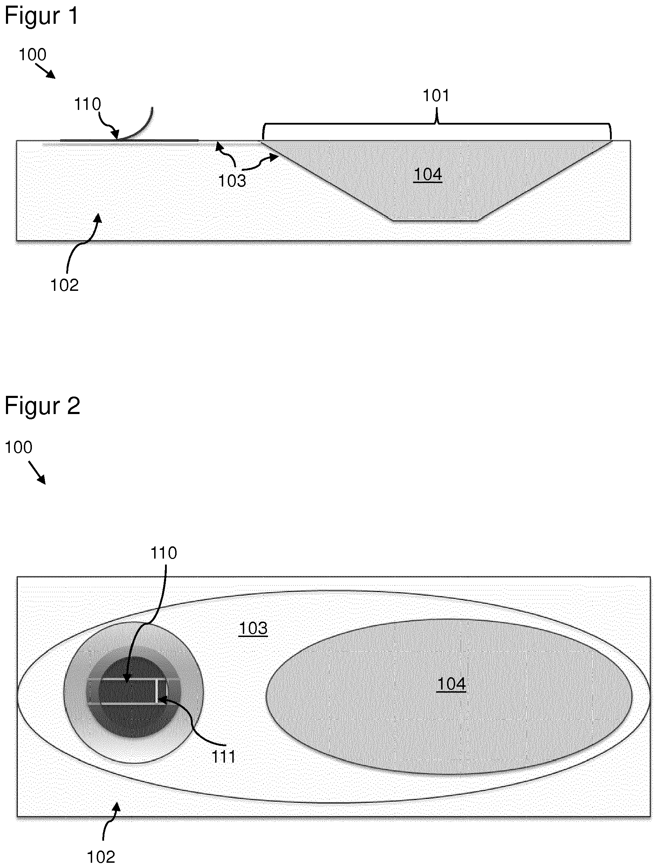

Figur 1 zeigt eine erste Ausführungsform einer Anzeigevorrichtung 100 zum Überwachen der strukturellen Integrität einer Reparaturstelle 101 an einer aus einem Verbundmaterial 102 gefertigten Laminatstruktur eines Teils einer Luftfahrzeugaußenhaut. Die Anzeigevorrichtung 100 weist einen länglichen dünnen Indikatorstreifen 110 auf. Der Indikatorstreifen ist in unmittelbarer Nachbarschaft der Reparaturstelle 101 lösbar auf der äußeren Schicht der Laminatstruktur aufgebracht. Der Indikatorstreifen 110 ist ausgebildet, eine vordefinierte Restfestigkeit einer Klebung 103 eines Reparaturpatch 104 mit dem umgebenden Verbundmaterial 102 anzuzeigen. Um die Zuverlässigkeit einer Reparatur eines Verbundmaterials 102 zu detektieren weist die Anzeigevorrichtung 100 einen Indikatorstreifen 110 auf, der auf einem über die Reparaturstelle 101 hinaus erweiterten Erstreckungsbereich der Klebung 103 aufgebracht ist. Bei Erreichen einer vordefinierten Restfestigkeit der Klebung 103 löst sich der Indikatorstreifen 110 wenigstens teilweise von der Klebung 103 ab. Der Indikatorstreifen 110 wurde mit einer definierten Vorspannung auf der Klebung aufgebracht 103 und steht bei einer Ablösung wenigstens teilweise von dem Verbundmaterial 102 ab. Die in den Figur 1 dargestellte Ausführungsform der Anzeigevorrichtung 100 zeigt den Indikatorstreifen 110 in der wenigstens teilweise abgelösten Stellung, um anzuzeigen, dass eine vordefinierte Restfestigkeit der Klebung 103 erreicht ist und sich der Indikatorstreifen 110 somit wenigstens teilweise ablösen konnte.

Figur 2 zeigt eine weitere Ansicht der in Figur 1 dargestellten Ausführungsform der Anzeigevorrichtung 100 in Draufsicht. Wie in Figur 2 zu erkennen ist, ist der Indikatorstreifen 110 auf einem sich über die eigentliche Reparaturstelle hinaus erstreckenden Bereich der Klebung 103 aufgebracht. Bei der in Figur 2 dargestellten Ausführungsform weist der Indikatorstreifen 110 beispielhaft ein den Indikatorstreifen 110 umschließenden kreisförmigen Rahmen auf. Mit Hilfe des umgebenden Rahmens kann der Indikatorstreifen bei einer Sichtkontrolle der Laminatstruktur einer Luftfahrzeugaußenhaut leichter gefunden werden. Der Indikatorstreifen 110 kann in einer weiteren bevorzugten Ausführungsform auch ohne diesen Rahmen aufgebracht sein. Der Indikatorstreifen 110 weist in der in Figur 2 dargestellten Ausführungsform eine vordefinierte Bruchlinie 111 auf. Bei Erreichen einer vordefinierten Restfestigkeit der Klebung 103 bricht der Indikatorstreifen 110 entlang der Bruchlinie 111 auf Grund der Vorspannung, mit der der Indikatorstreifen 110 auf die Klebung 103 aufgebracht ist. Die Bruchfestigkeit des Indikatorstreifens 110 entlang der Bruchlinie 111 ist vorzugsweise auf die Restfestigkeit des Klebung 103 abgestimmt, so dass sich der Indikatorsteifen 110 bei Erreichen der vordefinierten Restfestigkeit der Klebung 103 ablöst und entlang der Bruchlinie 111 entsprechend leicht bricht.

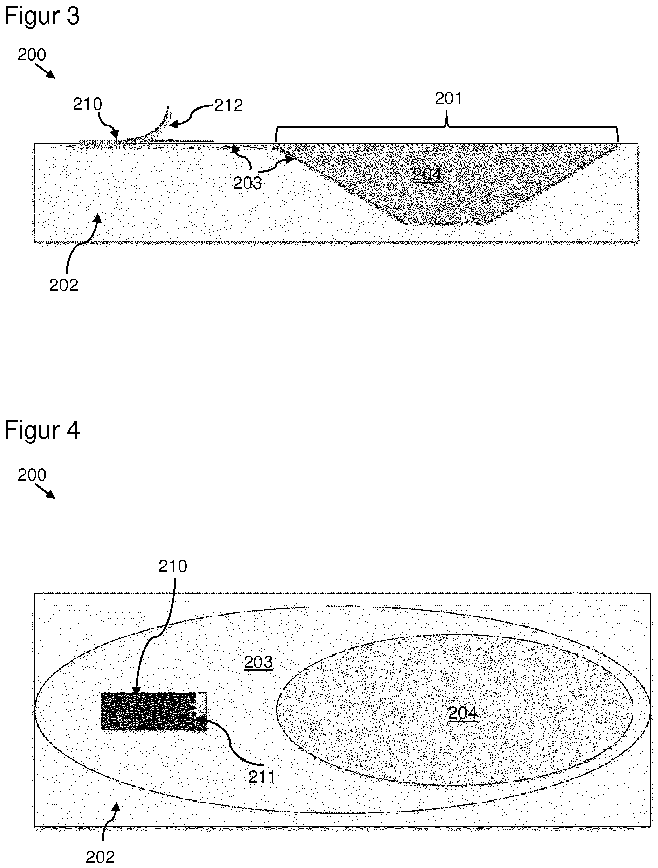

Figur 3 zeigt eine weitere Ausführungsform der Anzeigevorrichtung 200 zum Überwachen der strukturellen Integrität einer Reparaturstelle 201 an einer aus einem Verbundmaterial 202 gefertigten Laminatstruktur eines Teils einer Luftfahrzeugaußenhaut. Der Indikatorstreifen 210 ist bei der in Figur 3 dargestellten Ausführungsform in einer teilweise abgelösten Stellung dargestellt. Auf der der Luftfahrzeugaußenhaut zugewandten Seite des Indikatorstreifens 210 ist ein Klebemittel 212 aufgebracht, über das der Indikatorstreifen 210 auf der Laminatstruktur 202 unter einer vordefinierten Vorspannung aufgebracht ist. Bei Erreichen einer vordefinierten Restfestigkeit der Klebung 203 löst sich auf Grund der Vorspannung der Indikatorstreifen 210 wenigstens teilweise ab und zeigt somit an, dass eine vordefinierte Restfestigkeit der Klebung 203 des Reparaturstelle 201 erreicht bzw. unterschritten worden ist.

Figur 4 zeigt eine weitere Ansicht der in Figur 3 dargestellten Ausführungsform der Anzeigevorrichtung 200 in Draufsicht. Der Indikatorstreifen 210 weist in der in Figur 4 dargestellten Ausführungsform eine Sollbruchstelle 211 auf. Die Sollbruchstelle 211 ist bei der in Figur 4 dargestellten Ausführungsform als gezackte Bruchlinie ausgeführt. Die Sollbruchstelle 211 kann aber gemäß weiteren nicht dargestellten Ausführungsformen auch jede andere geeignete Form aufweisen.

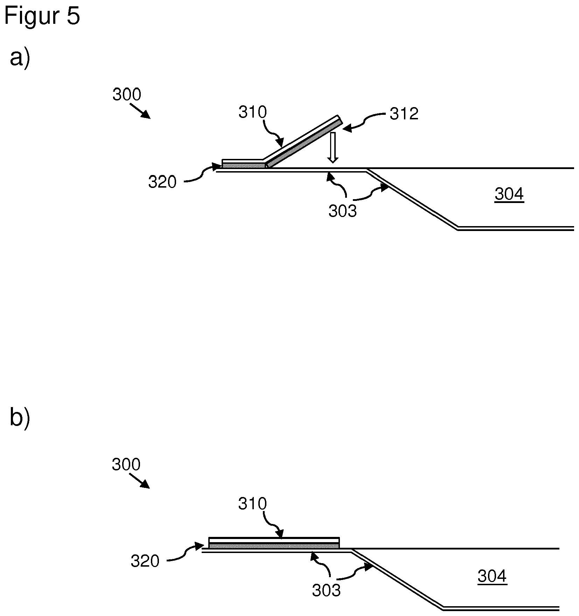

Figuren 5a und b zeigen verschiedene Schritte des Verfahrens zum Aufbringen des Indikatorstreifens 310 einer Anzeigevorrichtung 300 zum Überwachen der strukturellen Integrität einer Reparaturstelle an einer aus einem Verbundmaterial gefertigten Laminatstruktur.

Bei dem in Figur 5a dargestellten Verfahrensschritt wird der unter einer vordefinierten Vorspannung stehende Indikatorstreifen 310 mit einem ersten Bereich mittels eines Klebefilms 320 auf die bereits ausgehärtete Klebung 303 aufgebracht. Nach dem Aushärten des Klebefilms 320 wird der weitere noch nach oben abstehende Bereich des Indikatorstreifens 310 ebenfalls mit einem Klebefilm 312 auf die ausgehärtete Klebung 303 aufgebracht und ausgehärtet. Nach dem Aushärten des Klebefilms 312 ist der Indikatorstreifen 310, wie in Figur 5b dargestellt flächig auf die ausgehärtete Klebung 303 aufgebracht. Bei Erreichen einer vordefinierten Restfestigkeit der Klebung 303 löst sich der Indikatorstreifen 310 auf Grund der Vorspannung wenigstens teilweise ab und steht beispielsweise, wie in der in den Figuren 1 und 3 dargestellten Ausführungsform ab.

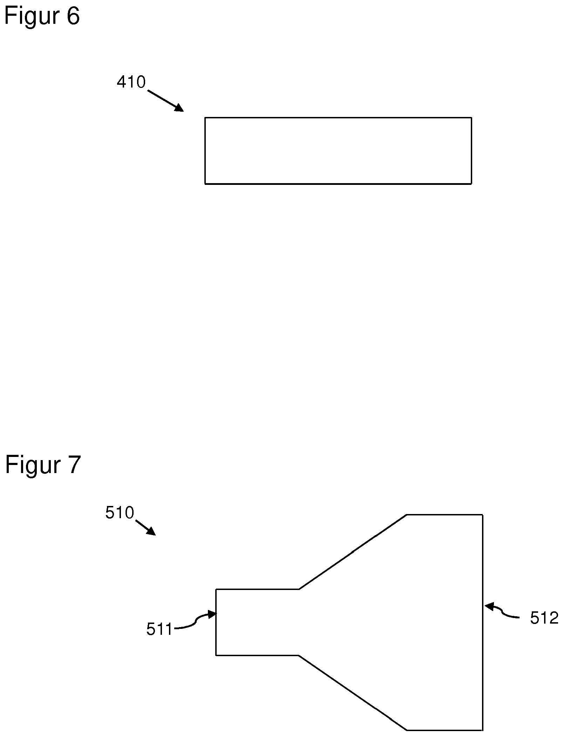

Figur 6 zeigt eine erste Ausführungsform eines Indikatorstreifens 410. Die in Figur 6 dargestellte Ausführungsform des Indikatorstreifens 410 weist über die gesamte Länge des Indikatorstreifens 410 ein gleichbleibendes Verhältnis von Länge zu Breite auf.

Figur 7 zeigt eine weitere Ausführungsform eines Indikatorstreifens 510. Die in Figur 7 dargestellte Ausführungsform des Indikatorstreifens 510 weist an den jeweiligen Enden 511, 512 ein unterschiedliches Verhältnis von Länge zu Breite auf. Die in den Figuren 6 und 7 dargestellten Ausführungsformen des Indikatorstreifens 410 und 510 sind nur zwei von vielen möglichen Beispielen wie die Form des Indikatorstreifen 410 bzw. 510 ausgebildet sein kann. Der Indikatorstreifen 510 weist bevorzugt eine Vorspannung auf und wenigstens zwei Bereiche 511, 512 wobei der Indikatorsteifen 510, wie in den Figuren 5a und 5b dargestellt, zuerst mit einem ersten Bereich 511 mit einem Klebefilm auf einen Erstreckungsbereich der zu detektierenden Klebung aufgebracht wird und der weitere Bereich 512 des Indikatorstreifens nach dem Aushärten des Klebefilms aufgebracht wird.

Obwohl die Erfindung vor allem unter Bezugnahme auf bestimmte Ausführungsformen gezeigt und beschrieben worden ist, sollte von denjenigen, die mit dem Fachgebiet vertraut sind, verstanden werden, dass zahlreiche Änderungen bezüglich Ausgestaltung und Details daran vorgenommen werden können, wenn sie in den durch die beigefügten Ansprüche definierten Umfang fallen.

### Bezugszeichenliste

100, 200, 300, 400 Anzeigevorrichtung
101, 201 Reparaturstelle
102, 202 Verbundmaterial
103, 203, 303 Klebung
104, 204, 304 Reparaturpatch
110, 210, 310, 410, 510 Indikatorstreifen
111, 211 Bruchlinie
212 Klebemittel
312, 320 Klebefilm
511, 512 Bereiche des Indikatorstreifens

## Patentansprüche

1. Anzeigevorrichtung (100, 200, 300, 400) zum Überwachen der strukturellen Integrität einer Reparaturstelle (101, 201) an einer aus einem Verbundmaterial (102, 202) gefertigten Laminatstruktur eines Teils einer Luftfahrzeugaußenhaut,
wobei die Anzeigevorrichtung (100, 200, 300, 400) wenigstens einen länglichen dünnen Indikatorstreifen (110, 210, 310, 410, 510) aufweist, der in unmittelbarer Nachbarschaft der Reparaturstelle (101, 201) lösbar auf einer äußeren Schicht der Laminatstruktur aufgebracht ist;
wobei der Indikatorstreifen (110, 210, 310, 410, 510) ausgebildet ist, eine vordefinierte Restfestigkeit einer Klebung (103, 203, 303) eines Reparaturpatch (104, 204, 304) mit dem umgebenden Verbundmaterial (102, 202) anzuzeigen;
wobei der Indikatorstreifen (110, 210, 310, 410, 510) mittels eines Klebemittels (212) auf der ausgehärteten Klebung (103, 203, 303) aufgebracht ist;
**dadurch gekennzeichnet, dass**
der Indikatorstreifen (110, 210, 310, 410, 510) eine vordefinierte Vorspannung aufweist, die auf eine zu erreichende Zielfestigkeit der Klebung (103, 203, 303) des Reparaturpatch (104, 204, 304) mit dem umgebenden Verbundmaterial (102, 202) abgestimmt ist.

2. Anzeigevorrichtung (100, 200, 300, 400) nach Anspruch 1,
wobei der Indikatorstreifen (110, 210, 310, 410, 510) aus einem Metall, einer Metalllegierung oder einem Faserverbundwerkstoff besteht.

3. Anzeigevorrichtung (100, 200, 300, 400) nach Anspruch 2,
wobei das Metall insbesondere Aluminium, Titan, Stahl oder eine Legierung aus einem der vorhergenannten Metalle aufweist.

4. Anzeigevorrichtung (100, 200, 300, 400) nach einem der vorherstehenden Ansprüche,
wobei die Klebung (103, 203, 303) mittels eines Klebefilms (312, 320) erfolgt.

5. Anzeigevorrichtung (100, 200, 300, 400) nach einem der vorherstehenden Ansprüche,
wobei das Klebemittel (212) eine höhere Haftung aufweist als der Klebefilm der Klebung (103, 203, 303) für den Reparaturpatch (104, 204, 304).

6. Anzeigevorrichtung (100, 200, 300, 400) nach einem der vorherstehenden Ansprüche,
wobei sich der Indikatorstreifen (110, 210, 310, 410, 510) bei Erreichen einer vordefinierten Restfestigkeit der Klebung (103, 203, 303) wenigstens teilweise ablöst oder ablösbar ist.

7. Anzeigevorrichtung (100, 200, 300, 400) nach einem der vorherstehenden Ansprüche,
wobei der Indikatorstreifen (110, 210, 310, 410, 510) eine vordefinierte Bruchstelle oder Bruchlinie (111, 211) aufweist.

8. Anzeigevorrichtung (100, 200, 300, 400) nach einem der vorherstehenden Ansprüche,
wobei der Indikatorstreifen (110, 210, 310, 410, 510) auf einem sich über den Umfang der Reparaturstelle (101, 201) hinaus erstreckenden Auftragungsbereich der Klebung (103, 203, 303) aufgebracht ist.

9. Anzeigevorrichtung (100, 200, 300, 400) nach einem der vorherstehenden Ansprüche,
wobei der Indikatorstreifen (110, 210, 310, 410, 510) eine durchgehende Dicke zwischen 0,1 mm und 0,5 mm oder zwischen 0,1 mm und 0,3 mm aufweist.

10. Anzeigevorrichtung (100, 200, 300, 400) nach einem der vorherstehenden Ansprüche,
wobei der Indikatorstreifen (110, 210, 310, 410, 510) ein Verhältnis von Länge zu Breite im Bereich von 1 zu 2 bis 1 zu 10, oder im Bereich von 1 zu 3 bis 1 zu 5 aufweist.

11. Anzeigevorrichtung (100, 200, 300, 400) nach einem der vorherstehenden Ansprüche,
wobei der Indikatorstreifen (110, 210, 310, 410, 510) in einer Vertiefung des Verbundmaterials (102, 202) eingebracht ist.

12. Anzeigevorrichtung (100, 200, 300, 400) nach Anspruch 11,
wobei die Oberfläche des Indikatorstreifens (110, 210, 310, 410, 510) bündig mit der Oberfläche des umgebenden Verbundmaterials (102, 202) ist.

13. Verfahren zum Überwachen der strukturellen Integrität einer Reparaturstelle (101, 201), wobei die Reparatur an einer aus einem Verbundmaterial (102, 202) gefertigten Laminatstruktur vorgenommen wurde, wobei die Laminatstruktur Teil einer Luftfahrzeugaußenhaut ist, wobei das Verfahren umfasst:
(a) Aufbringen eines Klebefilms (312, 320) auf einer Reparaturstelle (101, 201) der Laminatstruktur, wobei sich der Klebefilm (312, 320) auf einer äußeren Schicht der Laminatstruktur wenigstens teilweise über die Reparaturstelle (101, 201) hinaus in einen Erstreckungsbereich erstreckt;
(b) Einkleben eines Reparaturpatch (104, 204, 304) auf den Klebefilm (312, 320) in der Reparaturstelle (101, 201);
(c) Aushärten der Klebung (103, 203, 303); und
(d) Aufbringen einer Anzeigevorrichtung (100, 200, 300, 400) aufweisend einen Indikatorstreifen (110, 210, 310, 410, 510) auf dem Erstreckungsbereich, wobei der Indikatorstreifen (110, 210, 310, 410, 510) ausgebildet ist, eine vordefinierte Restfestigkeit der Klebung (103, 203, 303) des Reparaturpatch (104, 204, 304) mit dem umgebenden Verbundmaterial anzuzeigen, wobei der Indikatorstreifen (110, 210, 310, 410, 510) mittels eines Klebemittels (212) auf der ausgehärteten Klebung (103, 203, 303) aufgebracht wird;
**dadurch gekennzeichnet, dass**
der Indikatorstreifen (110, 210, 310, 410, 510) eine vordefinierte Vorspannung aufweist, die auf eine zu erreichende Zielfestigkeit der Klebung (103, 203, 303) des Reparaturpatch (104, 204, 304) mit dem umgebenden Verbundmaterial (102, 202) abgestimmt ist.

## Claims

1. Indication device (100, 200, 300, 400) for monitoring the structural integrity of a repair location (101, 201) on a laminate structure, manufactured from a composite material (102, 202), of a part of an aircraft outer skin,
wherein the indication device (100, 200, 300, 400) has at least one elongate, thin indicator strip (110, 210, 310, 410, 510), which is detachably applied to an outer layer of the laminate structure in the immediate vicinity of the repair location (101, 201);
wherein the indicator strip (110, 210, 310, 410, 510) is designed to indicate a predefined residual strength of an adhesive joint (103, 203, 303) of a repair patch (104, 204, 304) to the surrounding composite material (102, 202);
wherein the indicator strip (110, 210, 310, 410, 510) is applied to the cured adhesive joint (103, 203, 303) by means of an adhesive (212);
**characterized in that**
the indicator strip (110, 210, 310, 410, 510) has a predefined prestress, which is matched to a target strength to be achieved of the adhesive joint (103, 203, 303) of the repair patch (104, 204, 304) to the surrounding composite material (102, 202).

2. Indication device (100, 200, 300, 400) according to Claim 1,
wherein the indicator strip (110, 210, 310, 410, 510) is composed of a metal, a metal alloy or a fibre composite material.

3. Indication device (100, 200, 300, 400) according to Claim 2,
wherein the metal comprises, in particular, aluminium, titanium, steel or an alloy of one of the aforementioned metals.

4. Indication device (100, 200, 300, 400) according to any of the preceding claims,
wherein the adhesive joint (103, 203, 303) is brought about by means of an adhesive film (312, 320).

5. Indication device (100, 200, 300, 400) according to any of the preceding claims,
wherein the adhesive (212) has a higher adhesion than the adhesive film of the adhesive joint (103, 203, 303) for the repair patch (104, 204, 304).

6. Indication device (100, 200, 300, 400) according to any of the preceding claims,
wherein the indicator strip (110, 210, 310, 410, 510) detaches itself at least partially or can be detached when a predefined residual strength of the adhesive joint (103, 203, 303) is reached.

7. Indication device (100, 200, 300, 400) according to any of the preceding claims,
wherein the indicator strip (110, 210, 310, 410, 510) has a predefined breaking point or breaking line (111, 211).

8. Indication device (100, 200, 300, 400) according to any of the preceding claims,
wherein the indicator strip (110, 210, 310, 410, 510) is applied to an application region of the adhesive joint (103, 203, 303), said application region extending beyond the extent of the repair location (101, 201).

9. Indication device (100, 200, 300, 400) according to any of the preceding claims,
wherein the indicator strip (110, 210, 310, 410, 510) has a constant thickness of between 0.1 mm and 0.5 mm or between 0.1 mm and 0.3 mm.

10. Indication device (100, 200, 300, 400) according to any of the preceding claims,
wherein the indicator strip (110, 210, 310, 410, 510) has a ratio of length to width in the range of from 1:2 to 1:10, or in the range of from 1:3 to 1:5.

11. Indication device (100, 200, 300, 400) according to any of the preceding claims,
wherein the indicator strip (110, 210, 310, 410, 510) is introduced into a depression of the composite material (102, 202).

12. Indication device (100, 200, 300, 400) according to Claim 11,
wherein the surface of the indicator strip (110, 210, 310, 410, 510) is flush with the surface of the surrounding composite material (102, 202).

13. Method for monitoring the structural integrity of a repair location (101, 201), wherein the repair has been carried out on a laminate structure manufactured from a composite material (102, 202), wherein the laminate structure is part of an aircraft outer skin, wherein the method comprises:
(a) applying an adhesive film (312, 320) to a repair location (101, 201) of the laminate structure, wherein the adhesive film (312, 320) extends on an outer layer of the laminate structure at least partially beyond the repair location (101, 201) into a region of extent;
(b) gluing a repair patch (104, 204, 304) to the adhesive film (312, 320) at the repair location (101, 201) ;
(c) curing the adhesive joint (103, 203, 303); and
(d) applying an indication device (100, 200, 300, 400) having an indicator strip (110, 210, 310, 410, 510) to the region of extent, wherein the indicator strip (110, 210, 310, 410, 510) is designed to indicate a predefined residual strength of the adhesive joint (103, 203, 303) of the repair patch (104, 204, 304) to the surrounding composite material, wherein the indicator strip (110, 210, 310, 410, 510) is applied to the cured adhesive joint (103, 203, 303) by means of an adhesive (212) ;
**characterized in that**
the indicator strip (110, 210, 310, 410, 510) has a predefined prestress, which is matched to a target strength to be achieved of the adhesive joint (103, 203, 303) of the repair patch (104, 204, 304) to the surrounding composite material (102, 202).

## Revendications

1. Dispositif d'affichage (100, 200, 300, 400) destiné à surveiller l'intégrité structurelle d'un site de réparation (101, 201) sur une structure stratifiée, réalisée à partir d'un matériau composite (102, 202), d'une partie d'une peau d'aéronef,
le dispositif d'affichage (100, 200, 300, 400) comportant de minces bandes indicatrices allongées (110, 210, 310, 410, 510) qui sont appliquées de manière amovible sur une couche extérieure de la structure stratifiée à proximité dudit site de réparation (101, 201) ;
la bande indicatrice (110, 210, 310, 410, 510) étant conçue pour indiquer une résistance résiduelle prédéfinie d'un collage (103, 203, 303) d'une pastille de réparation (104, 204, 304) au matériau composite environnant (102, 202) ;
la bande indicatrice (110, 210, 310, 410, 510) étant appliquée sur le collage durci (103, 203, 303) au moyen d'un adhésif (212) ;
**caractérisé en ce que**
la bande indicatrice (110, 210, 310, 410, 510) présente une précontrainte prédéfinie qui est adaptée à une résistance cible à atteindre du collage (103, 203, 303) de la pastille de réparation (104, 204, 304) au matériau composite environnant (102, 202).

2. Dispositif d'affichage (100, 200, 300, 400) selon la revendication 1,
la bande indicatrice (110, 210, 310, 410, 510) comprenant un métal, un alliage métallique ou un matériau composite fibreux.

3. Dispositif d'affichage (100, 200, 300, 400) selon la revendication 2,
le métal incluant notamment l'aluminium, le titane, l'acier ou un alliage de l'un des métaux susmentionnés.

4. Dispositif d'affichage (100, 200, 300, 400) selon l'une des revendications précédentes,
le collage (103, 203, 303) étant effectué au moyen d'un film adhésif (312, 320).

5. Dispositif d'affichage (100, 200, 300, 400) selon l'une des revendications précédentes,
l'adhésif (212) présentant une adhérence plus élevée que le film adhésif du collage (103, 203, 303) pour la pastille de réparation (104, 204, 304).

6. Dispositif d'affichage (100, 200, 300, 400) selon l'une des revendications précédentes,
la bande indicatrice (110, 210, 310, 410, 510) se détachant ou pouvant être détachée au moins partiellement lorsqu'une résistance résiduelle prédéfinie du collage (103, 203, 303) est atteinte.

7. Dispositif d'affichage (100, 200, 300, 400) selon l'une des revendications précédentes,
la bande indicatrice (110, 210, 310, 410, 510) comportant un point de rupture prédéfini ou une ligne de rupture prédéfinie (111, 211).

8. Dispositif d'affichage (100, 200, 300, 400) selon l'une des revendications précédentes,
la bande indicatrice (110, 210, 310, 410, 510) étant appliquée sur la zone d'application du collage (103, 203, 303) qui s'étend au-delà du périmètre du site de réparation (101, 201).

9. Dispositif d'affichage (100, 200, 300, 400) selon l'une des revendications précédentes,
la bande indicatrice (110, 210, 310, 410, 510) ayant une épaisseur totale entre 0,1 mm et 0,5 mm ou entre 0,1 mm et 0,3 mm.

10. Dispositif d'affichage (100, 200, 300, 400) selon l'une des revendications précédentes,
la bande indicatrice (110, 210, 310, 410, 510) ayant un rapport longueur sur largeur dans la gamme de 1:2 à 1:10, ou dans la gamme de 1:3 à 1:5.

11. Dispositif d'affichage (100, 200, 300, 400) selon l'une des revendications précédentes,
la bande indicatrice (110, 210, 310, 410, 510) étant introduite dans une dépression du matériau composite (102, 202).

12. Dispositif d'affichage (100, 200, 300, 400) selon la revendication 11,
la surface de la bande indicatrice (110, 210, 310, 410, 510) affleurant la surface du matériau composite environnant (102, 202).

13. Procédé de surveillance de l'intégrité structurelle d'un site de réparation (101, 201), la réparation ayant été effectuée sur une structure stratifiée réalisée à partir d'un matériau composite (102, 202), la structure stratifiée faisant partie d'une peau d'aéronef, le procédé comprenant les étapes suivantes :
(a) appliquer un film adhésif (312, 320) sur un site de réparation (101, 201) de la structure stratifiée, le film adhésif (312, 320) s'étendant dans une zone d'extension au moins partiellement au-delà du site de réparation (101, 201) sur une couche extérieure de la structure stratifiée ;
(b) coller une pastille de réparation (104, 204, 304) sur le film adhésif (312, 320) dans le site de réparation (101, 201) ;
(c) faire durcir le collage (103, 203, 303) ; et
(d) appliquer un dispositif d'affichage (100, 200, 300, 400) comportant une bande indicatrice (110, 210, 310, 410, 510) sur la zone d'extension, la bande indicatrice (110, 210, 310, 410, 510) étant conçue pour afficher une résistance résiduelle prédéfinie du collage (103, 203, 303) de la pastille de réparation (104, 204, 304) au matériau composite environnant, la bande indicatrice (110, 210, 310, 410, 510) étant appliquée sur le collage durci (103, 203, 303) au moyen d'un adhésif (212) ;
**caractérisé en ce que**
la bande indicatrice (110, 210, 310, 410, 510) présente une précontrainte prédéfinie qui est adaptée à une résistance cible à atteindre du collage (103, 203, 303) de la pastille de réparation (104, 204, 304) au matériau composite environnant (102, 202).
